# EUROPÄISCHE PATENTSCHRIFT

(11) **EP 1 882 580 B1**
(45) Veröffentlichungstag und Bekanntmachung des Hinweises auf die Patenterteilung: **15.09.2010**
(21) Anmeldenummer: 07111677.6
(22) Anmeldetag: 03.07.2007
(51) Int. Cl.: B29C 67/00

(54) **Wechselbehälter**
Interchangeable container
Conteneur interchangeable

(30) Priorität: 04.07.2006 DE 202006010327 U
(43) Veröffentlichungstag der Anmeldung: 30.01.2008
(73) Patentinhaber: ProMetal RCT GmbH, 86167 Augsburg (DE)
(72) Erfinder: Höchsmann, Rainer, 86682 Genderkingen (DE); Müller, Alexander, 86343 Königsbrunn (DE); Schrupp, Uli, 86420 Diedorf (DE); Hühn, Stefan, 86169 Augsburg (DE); Marschner, Udo, 86420 Biburg (DE); Stachulla, Martin, 86157 Augsburg (DE)
(74) Vertreter: Viering, Jentschura & Partner

(56) Entgegenhaltungen:
- WO-A-02/26420

## Beschreibung

Die Erfindung betrifft einen Wechselbehälter für eine Anlage zum Aufbauen eines Formkörpers durch Ausbilden übereinanderliegender Schichten aus körnigem Material.

Im Stand der Technik sind im Gebiet des Rapid Prototyping und Lasersinterns Anlagen und Verfahren bekannt, bei denen ein körniges Material in einzelnen Schichten auf einer Plattform in einem Behälter abgelegt und Schicht nach Schicht örtlich selektiv verfestigt wird, um dadurch aus dem körnigen Material einen verfestigten Formkörper aufzubauen. Hierzu wird vor dem Auftragen einer neuen Schicht der von der Plattform gebildete, in seiner Höhenlage verstellbare Boden des Behälters um jeweils eine Schichtdicke abgesenkt. Nachdem alle erforderlichen Schichten aufgetragen und selektiv verfestigt sind, kann der auf diese Weise erzeugte Formkörper beispielsweise in einer Entfernungsstation durch Entfernen des nicht-verfestigten körnigen Materials entnommen werden.

Ein austauschbarer Behälter bzw. Wechselbehälter, in dem auf diese Art und Weise ein Formkörper aufgebaut werden kann, ist zum Beispiel aus der EP 1037739 B1 bekannt. Der dort offenbarte Wechselbehälter weist einen Behälterboden auf, der eine Werkstückplattform bildet, die innerhalb des Behälters höhenverfahrbar ist. In einer hinteren Seitenwand weist der Wechselbehälter Eingriffsausnehmungen auf, durch welche unterhalb der Werkstückplattform ein oder mehrere Tragarme hindurchgreifen, wobei die Tragarme höhenverstellbar an der Aufbaustation der Anlage montiert sind. Sobald ein Formkörper vollständig ausgebildet ist, wird die Werkstückplattform arretiert und der gesamte Wechselbehälter inklusive des Formkörpers kann aus der Aufbaustation der Anlage entfernt werden.

Alternativ kann in den Wechselbehälter gemäß dem genannten Stand der Technik eine Hubvorrichtung unter der Werkstückplattform zu deren Höhenverfahrbarkeit integriert sein.

Derart ausgebildete Wechselbehälter haben allerdings den Nachteil, dass sie, in der Ausführungsform ohne integrierte Hubvorrichtung, über ausreichend große und lange Eingriffsausnehmungen verfügen müssen, damit die Tragarme an der Aufbaustation der Anlage dort hindurch eingreifen können. Weiterhin sind Arretierungen notwendig, um zu gewährleisten, dass die Werkstückplattform in einer unveränderten Höhe bleibt, wenn der Wechselbehälter aus der Aufbaustation entfernt wird, wobei dann die Tragarme nicht mehr unterhalb der Werkstückplattform angeordnet sind. Der Wechselbehälter mit unter der Werkstückplattform integrierter Hubvorrichtung ist andererseits aufwendig, wodurch der Wechselbehälter groß und schwer und damit beim Austauschen bzw. beim Bewegen von einer Station zu einer anderen schwierig zu handhaben ist.

Aus WO 02/26420 A1 ist ein mobiler Wechselbehälter gemäß dem Oberbegriff des Patentanspruchs 1 bekannt, wobei der Wechselbehälter auf einer Rollenbahn in eine Arbeitsstation in einen Rahmen eingefahren wird, an dem ein seitlicher Spindeltrieb mit vertikaler Schraubspindel eingebaut ist. In dem Rahmen sind vertikal verstellbare Klauen vorgesehen, die in der Arbeitsstation in den Wechselbehälter hinein und unter dessen vertikal verschiebbare Bodenstruktur gefahren werden und die von dem Spindeltrieb angetrieben werden.

Es ist eine Aufgabe der Erfindung, einen Wechselbehälter zu schaffen, der leicht zu handhaben ist und dessen höhenverstellbare Werkstückplattform zuverlässig und einfach betätigbar ist.

Dies wird durch einen Wechselbehälter mit den Merkmalen in Anspruch 1 erzielt. Weitere bevorzugte Ausführungsformen sind in den abhängigen Ansprüchen beschrieben.

Gemäß der Erfindung ist ein Wechselbehälter für eine Anlage zum Aufbauen eines Formkörpers durch Ausbilden übereinander liegender Schichten aus körnigem Material, welches Schicht nach Schicht örtlich selektiv verfestigt wird, mit einer Bodenstruktur versehen, die in dem Behälterinnenraum in Richtung parallel zu den Behälter-Seitenwänden verschiebbar ist. Weiter ist der Wechselbehälter mit wenigstens einem Spindeltrieb versehen, der eine Schraubspindel, die in eine der vertikalen Behälterseiten drehbar eingebaut ist, und eine Spindelmutter aufweist, an welcher die Bodenstruktur abgestützt ist, so dass die Bodenstruktur in dem Behälterinnenraum mittels des Spindeltriebs schrittweise absenkbar ist.

Gemäß der Erfindung ist daher zum gesteuerten Absenken der Bodenstruktur ein Spindeltrieb vorgesehen, dessen Schraubspindel unmittelbar in eine der vertikalen Behälterseiten eingebaut ist. Anders als beim Einbauen eines Hubmechanismus unter der absenkbaren Bodenstruktur kann der Spindeltrieb aus Schraubspindel und Kugelumlauf-Spindelmutter in einer der vertikalen Behälterseiten, insbesondere an der Außenseite einer Seitenwand des Wechselbehälters platz- und gewichtssparend untergebracht werden, wobei auch kleine Absenkschritte für die Bodenstruktur mit hoher Genauigkeit durchgeführt werden können.

Überdies hat die Ausstattung des mobilen Wechselbehälters mit dem Spindeltrieb den Vorteil, dass der Spindeltrieb zusammen mit dem Wechselbehälter in eine andere Station verfahren wird, beispielsweise in eine Entlade- und/oder Entformungsstation. Dort kann dann die Bodenstruktur zum Entformen des Formkörpers aus dem Wechselbehälter mittels des Spindeltriebes zusammen mit dem Formkörper bis zum oberen Behälterrand angehoben werden, wodurch der Formkörper - ggf. nach Entfernen des den Formkörper umgebenden körnigen Materials - zur Seite hin auf eine Entladeplattform geschoben werden kann.

Der Wechselbehälter kann an seiner Bodenseite offen oder geschlossen sein.

Die Schraubspindel des Spindeltriebes ist im Betrieb des Wechselbehälters mit einem Schrittmotor gekuppelt. Hierzu kann die Schraubspindel an ihrem unteren Ende eine Antriebskupplung zum lösbaren Ankuppeln an einen stationären Schrittmotor aufweisen, der in einem Bauraum der Anlage stationär untergebracht ist, in welcher das Aufbauen des Schichtenkörpers erfolgt. Vorzugsweise handelt es sich um eine selbsttätige Antriebskupplung, mit welcher die Schraubspindel durch das Einfahren des Wechselbehälters selbsttätig mit einer stationären Gegenkupplung gekuppelt wird, die ihrerseits an den Schrittmotor angekuppelt ist.

Auch in einer anderen Station kann ein stationärer Motor mit einer derartigen selbsttätigen Antriebskupplung vorgesehen sein.

In einer Alternative kann der Schrittmotor wie der Spindeltrieb ebenfalls in den Wechselbehälter eingebaut sein. Hierbei ist der Schrittmotor, der mit der Schraubspindel mittels eines Transmissionsgliedes gekuppelt oder in den Spindeltrieb integriert ist, bevorzugt in den unteren Behälterbereich eingebaut, vorzugsweise an der die Schraubspindel aufweisenden Behälterseite. Wenn der Wechselbehälter einen Spindeltrieb an jeder von zwei einander gegenüberliegenden Behälterseiten aufweist, kann für jeden der Spindeltriebe ein gesonderter Schrittmotor vorgesehen sein, wobei die Schrittmotoren miteinander gleichlaufend synchronisiert gesteuert sind.

Alternativ kann für beide Spindeltriebe ein gemeinsamer Schrittmotor vorgesehen sein, der mit jedem der Spindeltriebe mittels eines Transmissionsgliedes gekuppelt ist.

Es ist auch möglich, den Schrittmotor unterhalb der Bodenstruktur auf einem Behälterboden oder einem unter der Bodenplattform eingebauten Träger anzuordnen.

Im Folgenden wird die Erfindung anhand bevorzugter Ausführungsformen unter Bezugnahme auf die Zeichnungen erläutert. Die Zeichnungen zeigen:
Figur 1a eine aufgeschnittene Seitenansicht eines Wechselbehälters gemäß einer ersten Ausführungsform der Erfindung,
Figur 1b eine schematische Teilansicht eines Wechselbehälters gemäß der ersten Ausführungsform,
Figur 2 eine perspektivische Ansicht eines Wechselbehälters gemäß einer zweiten Ausführungsform der Erfindung,
Figur 3 eine perspektivische Ansicht eines Wechselbehälters gemäß einer dritten Ausführungsform der Erfindung.

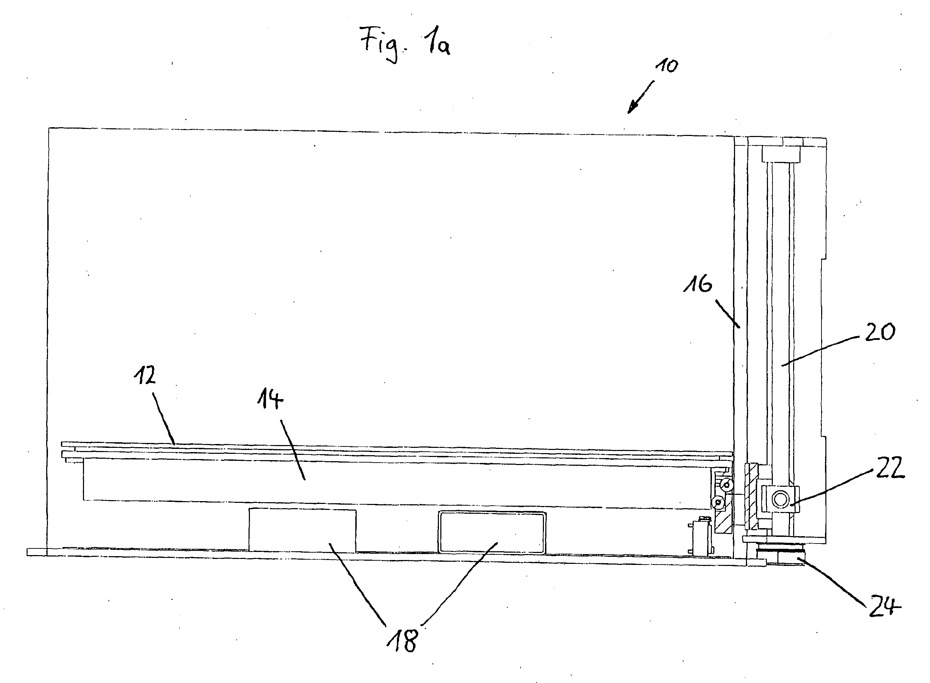

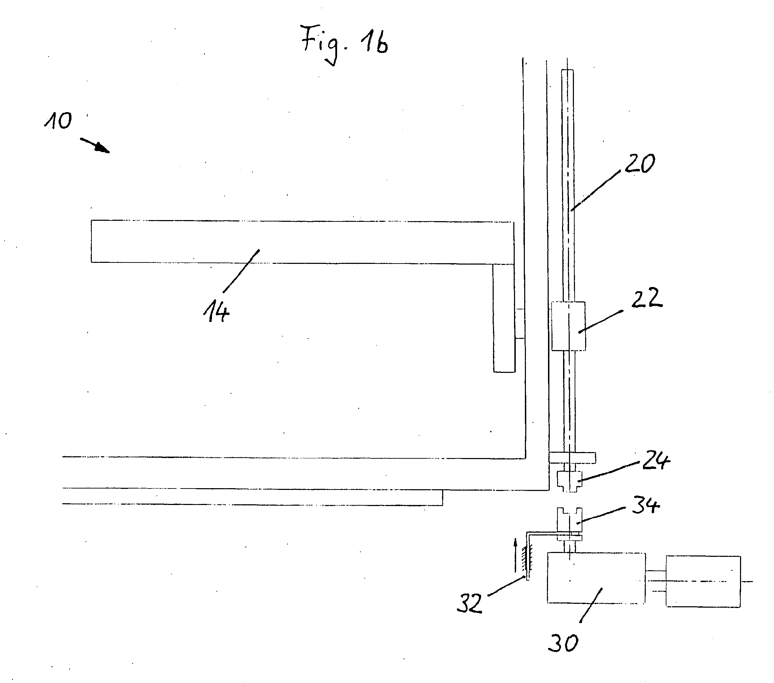

Gemäß der ersten Ausführungsform, die in der aufgeschnittenen Seitenansicht der Figur 1a und der Teilansicht der Figur 1b dargestellt ist, ist der Wechselbehälter 10 gemäß der Erfindung als oben offener mobiler Behälter mit vier Seitenwänden ausgebildet, der im Wesentlichen rechteckig ist. Wenngleich der Wechselbehälter 10 einen quadratischen Querschnitt haben kann, hat der Wechselbehälter 10 vorzugsweise einen länglich rechteckigen Querschnitt, der von je zwei einander paarweise gegenüberliegenden horizontal langen Seitenwänden und horizontal kurzen Seitenwänden begrenzt wird. Eine der Seitenwände, in diesem Fall eine der kurzen Seitenwände, weist Eingriffsausnehmungen 16 auf, die die Form von senkrecht verlaufenden Schlitzen haben. Durch die Eingriffsausnehmungen 16 greifen Tragansätze einer in ihrer Höhenlage in dem Behälter verstellbaren Bodenstruktur 14 hindurch, auf welcher eine den Boden des Behälters bildende Werkstückplattform 12 im Innern des Behälters abgestützt ist und welche ihrerseits auf einer Hubvorrichtung abgestützt ist, die an der Außenseite der kurzen Seitenwand des Behälters 10 vorgesehen ist. Die Bodenstruktur 14 kann z.B. in Form von Tragarmen oder in Form eines Tragrahmens oder dergleichen gestaltet sein. Die Hubvorrichtung weist einen Spindeltrieb bzw. einen Kugelumlauf-Spindeltrieb auf, bei welchem die Spindelmutter 22, die entlang der Schraubspindel 20 durch eine Drehung derselben verstellt wird, als Kugelumlaufmutter ausgebildet ist. Die Spindel 20 ist senkrecht angeordnet und vorzugsweise oben und unten drehbar gelagert. Die Spindelmutter 22 ist mit der Bodenstruktur 14 fest verbunden, und durch eine Bewegung der Spindelmutter 22 entlang der Spindel 20 wird eine Höhenverstellbarkeit der Bodenstruktur 14 und damit der Werkstückplattform 12 bereitstellt. Darüber hinaus kann der Spindeltrieb selbsthemmend sein, sodass keine Abstützung der Werkstückplattform 12 beim Entfernen des Wechselbehälters 10 aus einer Station erforderlich ist.

Ferner ist an einem Ende, vorzugsweise am unteren Ende der Spindel 20 eine Kupplung 24 zum Kuppeln mit einem Motor 30 vorgesehen. Der Motor 30 zum Antreiben der Spindel 20 ist vorzugsweise ein elektrischer Gleichstrom-Servomotor bzw. ein Schrittmotor, der bei dieser ersten Ausführungsform an der Aufbaustation der Rapid Prototyping Anlage stationär vorgesehen ist. Sobald der Wechselbehälter in die Aufbaustation der Anlage eingesetzt wird, wird die Abtriebswelle des in der Aufbaustation angeordneten Motors 30 über ein Transmissionsglied mit der Kupplung 24 der Spindel 20 vorzugsweise selbsttätig in Eingriff gebracht, so dass in der Aufbaustation das schrittweise Absenken der Werkstückplattform zum Auftragen einzelner Schichten des körnigen Materials leicht gewährleistet werden kann.

Wie in Figur 1b dargestellt, kann das Transmissionsglied eine Kupplungselement 34 auf der Abtriebswelle des hier stationären Motors 30 sein, welches formschlüssig zu der Kupplung 24 an der Spindel 20 passt. Dieses Kupplungselement 34 ist auf der Abtriebswelle des Motors 30 axial verschiebbar gelagert und kann mittels einer Verschiebevorrichtung 32 in Eingriff bzw. außer Eingriff mit der Kupplung 24 an der Spindel 20 gebracht werden.

Das Transmissionsglied zur Übertragung der Motorkraft auf die Kupplung 24 und damit auf die Spindel 20 kann beispielsweise auch einen Riementrieb, insbesondere einen zahnriementrieb aufweisen. Eine Übertragung der Motorkraft auf die Spindel ist auch mittels eines Zahnradgetriebes oder mittels Kupplungsscheiben möglich.

In einer Variante der ersten Ausführungsform der Erfindung weist der Wechselbehälter in beiden kurzen Seitenwänden jeweils eine Hubvorrichtung auf. Das heißt, auf zwei einander gegenüberliegenden Seiten des Behälters 10 sind Eingriffsausnehmungen 16 vorgesehen, durch welche die Tragansätze der Bodenstruktur 14 hindurchgreifen, auf welcher die Werkstückplattform 12 abgestützt ist. An der Außenseite des Behälters 10 sind die Tragansätze der Bodenstruktur 14 an ihren jeweiligen Enden mit einer Spindelmutter 22 verbunden, die auf einer vertikal angeordneten Spindel 20 bewegbar angeordnet ist. Jede der Hubvorrichtungen ist mit wenigstens einer Spindel 20 versehen, die vorzugsweise in der Quermitte der Behälterseite angeordnet ist. Um eine gleichzeitige und synchrone Bewegung der Spindeln 20 und damit ein gleichförmiges Absenken der Werkstückplattform 12 beim Aufbauen des Formkörpers zu gewährleisten, können die beiden Spindeln unterhalb des Behälters z.B. über einen Zahnriemen miteinander gekuppelt sein, wodurch für beide Hubvorrichtungen ein gemeinsamer Motor vorgesehen sein kann, wobei eine der Spindeln, wie anhand Fig. 1b erläutert, zusätzlich zu dem Zahnriemen mit einer Kupplung 24 zum Kuppeln mit einer Kupplung 34 eines stationären Motors 30 versehen sein kann. Es kann auch ein zweiter Motor in der Aufbaustation vorhanden sein, der mit der zweiten Spindel gekoppelt wird, wobei die beiden Motoren miteinander synchronisiert sind.

Fakultativ können in den unteren Rändern der langen Seitenwände des Wechselbehälters Aussparungen 18 vorgesehen sein, durch welche zum Beispiel ein Gabelstapler mit seiner Gabel hindurchgreifen kann, um den Wechselbehälter in eine Station der Anlage oder aus dieser heraus zu bewegen.

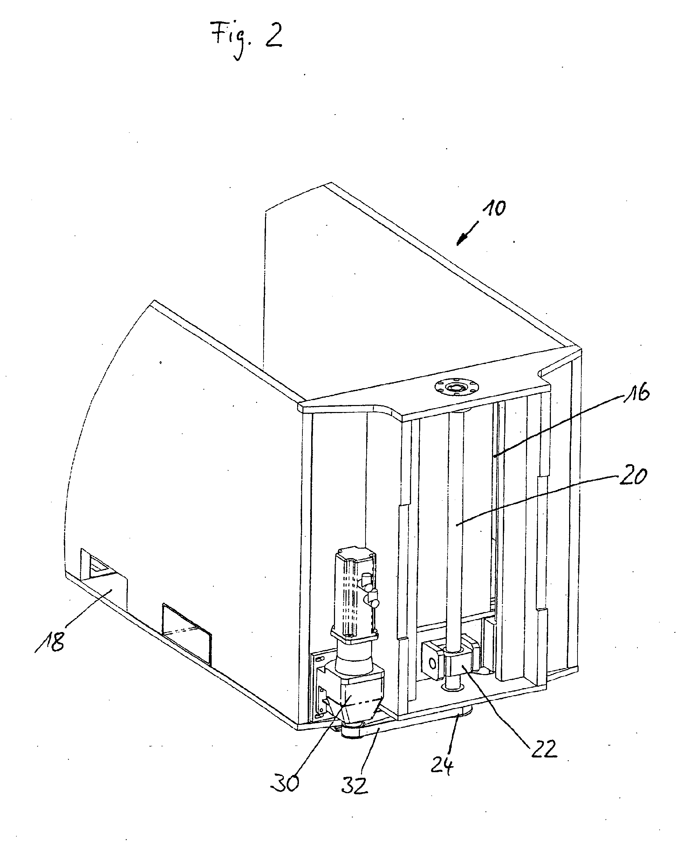

Gemäß der zweiten Ausführungsform der Erfindung, die in Figur 2 dargestellt ist, weist der Wechselbehälter 10, der im Wesentlichen dem Wechselbehälter gemäß der ersten Ausführungsform gleicht, einen Schrittmotor 30 auf, der an derjenigen Seitenwand montiert ist, an welcher sich die Kugelumlaufspindel 20 befindet, so dass eine Hubvorrichtung inklusive eines Schrittmotors in wenigstens eine Seite des Wechselbehälters integriert ist. Wie in Figur 2 ersichtlich, kann der Schrittmotor 30 neben der Spindel 20 an einer Behälterecke angeordnet sein. Die Übertragung der Motorkraft auf die Spindel ist in dieser Ausführungsform mittels eines Zahnriemens 32 gewährleistet. Die Energie für den Motor 30 kann über einen Akku direkt am Wechselbehälter 10 bereitgestellt sein oder es können Steckkontakte vorgesehen sein, die mit entsprechenden Steckkontakten an der Aufbaustation bzw. einer anderen Station der Anlage zusammenwirken, um den Motor 30 mit Strom bzw. Energie zu versorgen.

Auch bei dieser Ausführungsform kann der Wechselbehälter je eine Halsspindel 20 an beiden einander gegenüberliegenden Behälterseiten aufweisen, wobei nur ein Antriebsmotor 30 vorgesehen ist, der mit einer der Spindeln 20 gekuppelt ist, die ihrerseits miteinander gekuppelt sind, oder ein Antriebsmotor 30 je Spindel 20 vorgesehen ist und diese Antriebsmotoren miteinander gleichlaufend synchronisiert sind.

Sowohl bei der ersten als auch bei der zweiten Ausführungsform sind die Eingriffsausnehmungen mittels Bürstenabdichtungen, Bandabdichtungen oder dergleichen wenigstens über der Werkstückplattform in jeder von deren Höhenverstellpositionen geschlossen, um ein seitliches Austreten des körnigen Materials zu verhindern. Als zusätzlicher Schutz kann zum Beispiel ein Faltenschlauch an der Spindel vorgesehen sein.

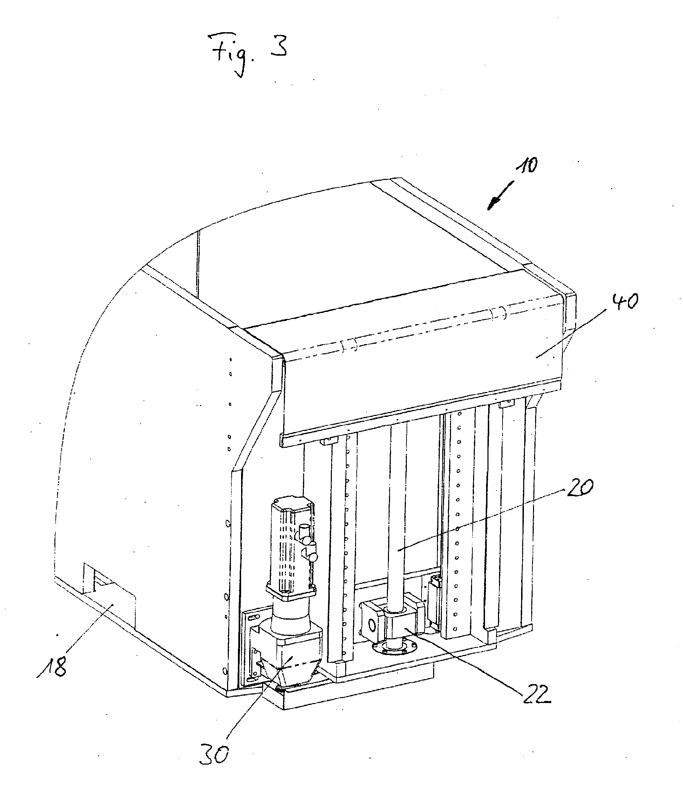

Gemäß der dritten Ausführungsform der Erfindung, die in Figur 3 dargestellt ist, ist der Wechselbehälter 10, der im Übrigen im Wesentlichen der ersten bzw. zweiten Ausführungsform gleicht, an seiner die Spindel aufweisenden Seite ohne eine eingebaute Seitenwand gestaltet. Stattdessen ist ein Vorhang 40 vorgesehen. Der Vorhang 40 dient zur Abdichtung der offenen Behälterseite wenigstens oberhalb der Werkstückplattform, um zu verhindern, dass körniges bzw. pulverförmiges Material seitlich aus dem Behälter 10 herausfließt. Der Vorhang 40 erstreckt sich über die gesamte Breite der kurzen Seite des Behälters hinweg, so dass in dieser Ausführungsform die Seitenwand vollständig weggelassen werden kann. Der Vorhang 40 ist an dem seitlichen Rand der Werkstückplattform 12 befestigt und verläuft von diesem Rand aus an der Innenseite entlang bis zum oberen Rand des Behälters 10, wird über Umlenkrollen an dem oberen Rand nach außen umgelenkt und kann an der Außenseite des Wechselbehälters 10 wieder nach unten geführt sein. Alternativ kann der Vorhang aufgerollt werden. Um ein kontinuierliches Nachführen des Vorhangs 40 beim Absenken der Werkstückplattform 12 zu gewährleisten, kann der Vorhang an seinem Ende, welches außerhalb des Wechselbehälters 10 angeordnet ist, durch eine geeignete Vorrichtung unter Spannung gehalten und gleichzeitig nachgeführt werden. Eine derartige geeignete Vorrichtung kann Zugfedern aufweisen oder auch einen Draht oder ein Seil, welches unter Spannung aufgewickelt bzw. abgewickelt wird. Der Vorhang selbst besteht insbesondere aus einem Stahlband oder einem Band aus faserverstärktem Kunststoff, so dass er einerseits flexibel genug ist, um an der Oberkante des Wechselbehälters umgelenkt zu werden, und andererseits stabil genug ist, um der Last standzuhalten, die durch das körnige Material auf der Innenseite des Behälters auf den Vorhang seitlich einwirkt.

Es wird angemerkt, dass auch die zweite bzw. die dritte Ausführungsform zwei Spindeltriebe aufweisen kann, die wie zu der Variante der ersten Ausführungsform beschrieben angeordnet sind.

Obwohl in der Zeichnung nicht gezeigt, ist auch eine Ausführungsform des Wechselbehälters möglich, der an jeder eine Spindel 20 aufweisenden Seite vollständig oder teilweise offen ist, ohne dass der Vorhang 40 gemäß der dritten Ausführungsform vorgesehen ist oder Abdichtungen für Eingriffsausnehmungen gemäß der ersten oder zweiten Ausführungsform vorgesehen sind. Bei derartigen Ausführungsformen kann der in dem Wechselbehälter auf der Bauplattform aufgebaute Schichtungskörper mit einer künstlichen Wand, die durch selektives Verfestigen des körnigen Materials Schicht nach Schicht aufgebaut wird, entlang der offenen Seite des Behälters oder wenigstens entlang der Eingriffsausnehmungen versehen werden.

## Patentansprüche

1. Wechselbehälter (10), der in eine Anlage zum Aufbauen eines Formkörpers durch Ausbilden übereinander liegender Schichten aus körnigem Material einzusetzen ist, welches Schicht nach Schicht örtlich selektiv verfestigt wird, mit vertikalen Behälterseiten und einer Bodenstruktur (14), die in dem Behälterinnenraum in Richtung parallel zu den BehälterSeitenwänden verschiebbar ist, **gekennzeichnet durch** wenigstens einen in den Wechselbehälter eingebauten Spindeltrieb, der eine Schraubspindel (20), die in eine der Behälterseiten drehbar eingebaut ist, und eine Spindelmutter (22) aufweist, an welcher die Bodenstruktur (14) abgestützt ist, so dass die Bodenstruktur in dem Behälterinnenraum mittels des Spindeltriebs schrittweise absenkbar ist.

2. Wechselbehälter nach Anspruch 1, wobei die Schraubspindel (20) eine Antriebskupplung (24) zum lösbaren Ankuppeln an einen stationären Schrittmotor aufweist.

3. Wechselbehälter nach Anspruch 1, wobei an den unteren Behälterbereich, vorzugsweise an der die Schraubspindel (20) aufweisenden Behälterseite, ein Schrittmotor (30) angebaut ist, der mittels eines Transmissionsgliedes (32) mit der Schraubspindel (20) gekuppelt ist.

4. Wechselbehälter nach einem der Ansprüche 1 bis 3, wobei an der Bodenstruktur (14) entlang der Behälterseiten, an der die Schraubspindel (20) angeordnet ist, ein Vorhang (40) befestigt ist, der mittels Rollen an der Behälteroberseite entsprechend der Absenkbewegung der Bodenstruktur (14) nachziehbar umgelenkt wird.

## Claims

1. An interchangeable container (10) to be inserted into a system for building a mold body by forming superimposed layers of granular material, the granular material locally and selectively hardened layer by layer, the container including vertical container sides and a bottom structure (14) that is displaceable in the interior of the container in a direction in parallel with the container side walls, **characterized by** at least one spindle drive mounted in the interchangeable container and comprising a screw spindle (20) which is rotatably mounted in one of the container sides and a spindle screw nut (22) on which the bottom structure (14) is supported so that the bottom structure can be lowered step by step in the interior of the container by means of the spindle drive.

2. The Interchangeable container according to claim 1, wherein the screw spindle (20) comprises a drive clutch (24) for detachably coupling with a stationary stepping motor.

3. The Interchangeable container according to claim 1, wherein a stepping motor (30) is mounted to a lower container portion, preferably on the container side comprising the screw spindle (20), the stepping motor being coupled with the screw spindle (20) by means of a transmission member (32).

4. The Interchangeable container according to any of claims 1 to 3, wherein a curtain (40) is attached to the bottom structure (14) along the container side on which the screw spindle (20) is arranged, the curtain redirected by means of rolls on a upper side of the container so as to be drawable down in correspondence with the lowering motion of the bottom structure (14).

## Revendications

1. Conteneur interchangeable (10), qui est destiné à être utilisé dans une installation pour la constitution d'un corps moulé moyennant la formation de couches superposées en matériau granuleux, qui est durci localement et sélectivement couche après couche, comportant des côtés verticaux et une structure de fond (14), apte à être déplacée à l'intérieur du conteneur dans une direction parallèle aux côtés latéraux du conteneur, **caractérisé par** au moins une commande à broche, qui est montée dans le conteneur interchangeable et qui comporte une broche filetée (20), montée rotative dans l'un des côtés du conteneur, et un écrou de broche (22), sur lequel la structure de fond (14) est mise en appui, de telle sorte que la structure de fond peut être abaissée progressivement à l'intérieur du conteneur au moyen de la commande à broche.

2. Conteneur interchangeable selon la revendication 1, dans lequel la broche filetée (20) comporte un couplage d'entraînement (24) pour le couplage amovible à un moteur pas à pas stationnaire.

3. Conteneur interchangeable selon la revendication 1, dans lequel un moteur pas à pas (30), qui est couplé à la broche filetée (20) au moyen d'un organe de transmission (32), est monté dans la partie inférieure du conteneur, de préférence sur le côté du conteneur muni de la broche filetée (20).

4. Conteneur interchangeable selon l'une quelconque des revendications 1 à 3, dans lequel sur la structure de fond (14), le long du côté du conteneur sur lequel est montée la broche filetée (20), est fixé un store (40) qui, au moyen de galets sur le côté supérieur du conteneur, est dévié de manière apte à être tiré en suivant le mouvement d'abaissement de la structure de fond (14).
